# EUROPÄISCHE PATENTSCHRIFT

(11) **EP 3 355 101 B1**
(45) Veröffentlichungstag und Bekanntmachung des Hinweises auf die Patenterteilung: **15.05.2019**
(21) Anmeldenummer: 17153557.8
(22) Anmeldetag: 27.01.2017
(51) Int. Cl.: G02C 13/00

(54) **COMPUTERIMPLEMENTIERTES VERFAHREN ZUR BESTIMMUNG EINER REPRÄSENTATION EINES BRILLENFASSUNGSRANDS ODER EINER REPRÄSENTATION DER RÄNDER DER GLÄSER EINER BRILLE**
COMPUTER-IMPLEMENTED METHOD FOR DETERMINING A REPRESENTATION OF A SPECTACLE FRAME RIM OR A REPRESENTATION OF THE EDGES OF THE LENSES OF A PAIR OF SPECTACLES
PROCÉDÉ ASSISTÉ PAR ORDINATEUR DESTINÉ À DÉTERMINER UNE REPRÉSENTATION D'UN BORD DE MONTURE DE LUNETTE OU D'UNE REPRÉSENTATION DES BORDS DE VERRES DE LUNETTES

(43) Veröffentlichungstag der Anmeldung: 01.08.2018
(73) Patentinhaber: Carl Zeiss Vision International GmbH, 73430 Aalen (DE); Carl Zeiss AG, 73447 Oberkochen (DE)
(72) Erfinder: NIEUWENHUIS, Claudia, 73457 Essingen (DE); WOJEK, Christian, 73434 Aalen (DE); SCHWARZ, Oliver, 73492 Rainau (DE)
(74) Vertreter: Patentanwälte Bregenzer und Reule Partnerschaftsgesellschaft mbB

(56) Entgegenhaltungen:
- DE-B4-102011 115 239
- US-A1- 2003 081 173
- US-A1- 2015 055 085
- US-A1- 2015 304 530

## Beschreibung

Die Erfindung betrifft ein computerimplementiertes Verfahren zur Bestimmung einer Repräsentation eines Brillenfassungsrands oder einer Repräsentation der Ränder der Gläser einer Brille gemäß Oberbegriff des Anspruchs 1.

Es sind Verfahren bekannt, die für einen gegebenen Tracer-Datensatz die zugehörigen Konturen in Bildaufnahmen finden. Dabei werden bildbasierte Verfahren wie Mustersuche oder Template Matching verwendet. Es wird exemplarisch auf die Offenbarung der DE 10 2011 115 239 B4 verwiesen. Nachteil dieser Lösung ist, dass der Tracer-Datensatz und damit die aufgesetzte Brille bekannt sein muss, um die Konturen in den aufgenommenen Bildern zu finden. Der typische Workflow beim Optiker ist aber, dass erst Tracer-Daten von einer Fassung erzeugt werden, wenn der Kunde die Brille schon zum Kauf ausgewählt hat. Das heißt, dass diese Daten nicht für alle Brillen im Geschäft vorliegen, wenn der Kunde sich im Laden aufhält. Das Bestimmen der Tracerdaten wird meist auch erst am Abend durchgeführt, wenn der Kunde schon den Laden verlassen hat, damit er nicht darauf warten muss. Beim Stand der Technik müssten also erst Tracer-Daten erzeugt werden, bevor die Zentrierung durchgeführt werden kann, was den Workflow des Optikers ändern würde und den Kunden Zeit kostet. Zusätzlich ist es auch umständlich, wenn jeder Optiker zu jeder Fassung den Tracer-Datensatz vorrätig haben muss. Diese Daten liegen meist auch nur zweidimensional vor, werden aber meist dreidimensional benötigt.

Es ist daher Aufgabe der Erfindung, ein Verfahren der eingangs genannten Art derart weiterzubilden, dass es vielseitiger anwendbar ist.

Diese Aufgabe wird erfindungsgemäß durch ein computerimplementiertes Verfahren mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, den Fassungsrand einer Brille auf dem Kopf eines Probanden, der in mindestens zwei zueinander kalibrierten Aufnahmen aufgenommen wurde, basierend auf einem parametrischen dreidimensionalen Brillenmodell in mehreren Ansichten vollautomatisch und gleichzeitig zu detektieren. Aus diesen Informationen können danach Zentrierparameter berechnet werden. Dabei werden zueinander kalibrierte Bilder bereitgestellt. Deren Kalibrierung umfasst die extrinsischen Eigenschaften der die Bilder aufnehmenden Kameras oder der die Bilder nacheinander aufnehmenden Kamera wie die relative Ausrichtung ihrer optischen Achsen sowie die relative Anordnung zueinander im Raum, sowie ihre intrinsischen Eigenschaften, also die Eigenschaften der Kameras selbst, die definieren, wie ein Punkt im Raum, der sich im internen Koordinatensystem der jeweiligen Kamera befindet, auf die Koordinaten der Pixel des aufgenommenen Bildes abgebildet wird. Eine ausführliche Beschreibung der Kalibrierung von Kameras findet sich im Lehrbuch "Multiple View Geometry in Computer Vision" von Richard Hartley und Andrew Zisserman, 2. Auflage, Cambridge University Press 2004, und dort insbesondere auf Seite 8.

Ausgehend von dieser allgemeinen Idee kann das erfindungsgemäße Verfahren bzw. das verwendete dreidimensionale Modell auf verschiedene Weise vereinfacht werden. So wird bevorzugt, dass die Bilder aus Pixeln bestehen und dass jedes Pixel ein die Wahrscheinlichkeit, dass das Pixel einen Teil der Ränder der Brillenfassung bzw. der Gläser enthält, abbildender Wert zugeordnet wird. Dadurch wird die Detektion der Fassungsränder bzw. der Glasränder vereinfacht. Eine gute Näherung für die Fassungsränder bzw. die Glasränder wird beispielsweise dann erhalten, wenn die geometrischen Parameter für das Modell nasale und/oder temporale Kanten der Brillenfassung bzw. der Gläser näherungsweise definierende Linien beschreiben. Anhand dieser Linien lässt sich die Brillenfassung bzw. die Brille in einer ersten Näherung bereits gut definieren. Eine weitere Vereinfachung des Modells sieht vor, dass es jeden Fassungsrand oder jedes Glas näherungsweise als in einer Ebene liegend definiert.

Gemäß einer vorteilhaften Weiterbildung der Erfindung werden aus dem Modell Darstellungen der Brillenfassung bzw. der Gläser generiert und auf die aufgenommenen Bilder projiziert. Dabei bilden diese Darstellungen insbesondere markante Bereiche der Brillenfassung bzw. der Gläser ab, wie beispielsweise nasale und/oder temporale Kanten. Die Projektion erfolgt zu dem Zweck, die Parameter des Modells so zu optimieren, dass das Modell zu den aufgenommenen Bildern und den daraus generierten Daten, insbesondere den o.a. die Wahrscheinlichkeit abbildenden Werten passt.

Die geometrischen Parameter werden vorzugsweise durch Einsatz einer Kostenfunktion optimiert. Kostenfunktionen wurden im Bereich der Wirtschaftswissenschaften entwickelt, um einen Zusammenhang zwischen Kosten einerseits und Parametern andererseits darstellen zu können. In den Wirtschaftswissenschaften wird eine Optimierung der Kosten vorgenommen, indem die in die Kostenfunktion einfließenden Parameter variiert werden, bis die Kostenfunktion ein Minimum erreicht. Dieses Prinzip kann auf die vorliegende Problemstellung übertragen werden, indem beispielsweise die Kostenfunktion die Übereinstimmung der auf die aufgenommenen Bilder projizierten Darstellungen bewertet. In die Kostenfunktion fließen dann die entsprechenden Abweichungen ein. Der durch die Kostenfunktion ermittelte Wert, im folgenden Kostenwert genannt, kann dann optimiert werden, wobei insbesondere Markov-Chain-Monte-Carlo- Methoden, Simulated Annealing Methoden, Gradienten-Abstiegsmethoden, Nelder-Mead-Verfahren oder Differential Evolution Methoden zum Einsatz kommen können.

Zur Vereinfachung der Optimierung können Parameter aus den Bilddaten bestimmt werden und in das Modell einfließen. Beispielsweise kann mittels geometrischer Positionsbestimmung, wobei insbesondere ein Triangulationsverfahren zur Anwendung kommen kann, die Position der Augen im Raum bestimmt werden und es können dadurch die Position der Augen definierende Parameter in das Modell einfließen. Des Weiteren kann das Modell vereinfacht werden, indem die geometrischen Parameter durch Vorgabe von Annahmen oder Statistiken hinsichtlich der Geometrie der Brillenfassung oder der Gläser und/oder durch Vorgabe von Annahmen oder Statistiken hinsichtlich Gesichtsmerkmalen im Wertebereich eingeschränkt und/oder in ihrer Anzahl beschränkt werden.

Beispielsweise kann man von einer bezüglich einer Mittelebene symmetrischen Geometrie der Brillenfassung bzw. der Gläser ausgehen. Alternativ können zum Beispiel Statistiken über Zentrierparameter vorliegen, aus denen Statistiken über die geometrischen Parameter des vorliegenden Modells abgeleitet werden können, z.B. können Statistiken über den Hornhautscheitelabstand helfen, die Positionierung der Fassung auf einen kleinen Bereich im Raum in einem bestimmten Abstand zu den Augen einzuschränken.

Zudem kann das Modell eine Wahrscheinlichkeitsverteilung enthalten, die Wahrscheinlichkeiten für mögliche Werte der Parameter angibt. Liegt der Wahrscheinlichkeitswert für einen Parameter unter einer vorgegebenen Schwelle, so kann vorgesehen sein, diesen im Verfahren ermittelten Parameter zu verwerfen.

Vorzugsweise wird das erfindungsgemäße computerimplementierte Verfahren mit einer Vorrichtung durchgeführt, wie sie grundsätzlich im Anspruch 14 und im Detail in der folgenden Figurenbeschreibung beschrieben wird.

Im Folgenden wird die Erfindung anhand eines in der Zeichnung schematisch dargestellten Ausführungsbeispiels näher erläutert. Es zeigen:

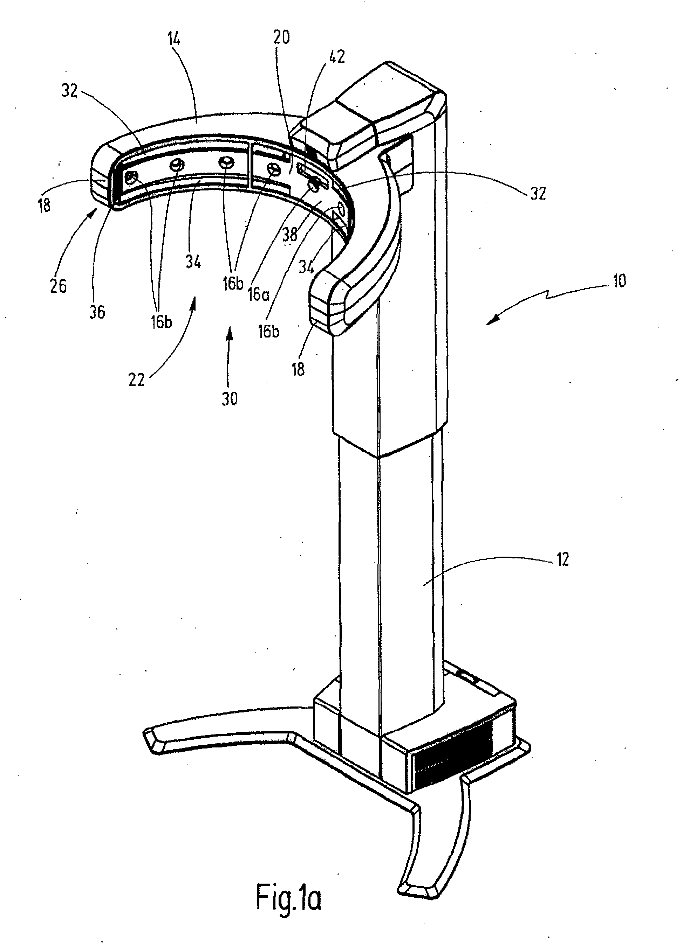

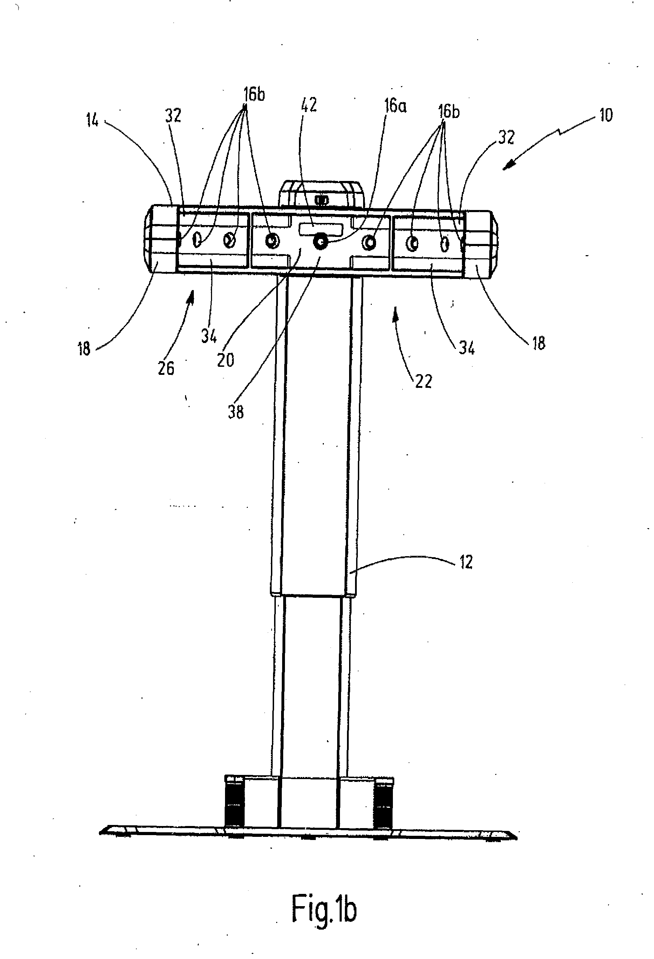

- Figur 1a, b: eine Vorrichtung zur Bestimmung von Zentrierparametern in perspektivischer Ansicht und in einer Ansicht von vorne;
- Figur 2a, b: Ansichten eines eine Brille tragendes Kopfes mit darauf projizierten genäherten Fassungskanten von vorne und von der Seite und
- Figur 3: ein Flussdiagramm zur Veranschaulichung eines Verfahrens gemäß einem bevorzugten Ausführungsbeispiel.

Die in der Zeichnung dargestellte Vorrichtung 10 dient der Bestimmung von Zentrierparametern für die Brillenanpassung. Sie weist eine Säule 12 auf, die höhenverstellbar einen starren Kameraträger 14 trägt, welcher wiederum eine Anzahl Kameras 16a, 16b trägt. Der Kameraträger 14 ist in Draufsicht näherungsweise kreisförmig gebogen und erstreckt sich zwischen zwei freien Enden 18, welche im Abstand zueinander angeordnet sind. Nach vorne, also zur Säule 12 hin, und zu den Seiten umschließt eine Innenfläche 20 des Kameraträgers 14 einen Innenraum 22, in dem sich bei der Aufnahme von Bildern durch die Kameras 16a, 16b der Kopf eines Probanden befindet. Die Innenfläche 20 ist in einer Richtung, die zwischen den freien Enden 18 verläuft, konkav gebogen und weist beispielsweise die Form eines Abschnitts einer Zylindermantelfläche auf, wobei der Zylinder eine kreisrunde oder ovale Grundfläche haben kann. Um den Kameraträger 14 bezüglich des Kopfs des Probanden auf der richtigen Höhe positionieren zu können, ist in der Säule 12 eine nicht näher dargestellte Hubeinrichtung angeordnet, mit der der Kameraträger 14 motorisch angetrieben auf und ab bewegt werden kann.

Alle Kameras 16a, 16b sind in einer sich zwischen den freien Enden 18 erstreckenden Kameraanordnung 26 angeordnet. Im vorliegenden Ausführungsbeispiel ist die Kameraanordnung 26 als Kamerareihe 26 ausgebildet, deren Kameras 16a, 16b sich alle in derselben Höhe befinden, wobei ihre optischen Achsen auf den Innenraum 22 gerichtet sind. Im vorliegenden Ausführungsbeispiel umfasst die Kamerareihe 26 eine in der Mitte des Kameraträgers 14 angeordnete Frontkamera 16a, deren optische Achse frontal auf das Gesicht des Probanden gerichtet ist, sowie acht paarweise symmetrisch bezüglich einer durch die optische Achse der Frontkamera 16a verlaufenden senkrechten Symmetrieebene angeordnete Seitenkameras 16b von denen jeweils vier von links und von rechts auf das Gesicht des Probanden gerichtet sind. Die Kameras 16a, 16b sind zudem kalibriert, so dass sie gleichzeitig kalibrierte Bilder des Probanden aufnehmen können. Die Kalibrierung umfasst die extrinsischen Eigenschaften wie die relative Ausrichtung ihrer optischen Achsen sowie die relative Anordnung zueinander im Raum, sowie ihre intrinsischen Eigenschaften, also die Eigenschaften der Kameras selbst, die definieren, wie ein Punkt im Raum, der sich im internen Koordinatensystem der jeweiligen Kamera befindet, auf die Koordinaten der Pixel des aufgenommenen Bildes abgebildet wird.

Der Kameraträger 14 umschließt den Innenraum 22 nur nach vorne, zur Säule 12 hin, und zu den Seiten, also links und rechts des Kopfes des Probanden. Nach oben, unten sowie zu einer Rückseite 30 hin ist er offen, wobei die freien Enden 18 zueinander einen Abstand von mindestens 25cm aufweisen, so dass sich der Proband bequem von der Rückseite aus nähern kann. Im gezeigten Ausführungsbeispiel beträgt der Abstand 70 bis 80cm.

Zur Ausleuchtung des Innenraums 22 ist eine Beleuchtungseinrichtung mit einer oberhalb der Kamerareihe 26 verlaufenden oberen Lichtleiste 32 sowie einer unterhalb der Kamerareihe 26 verlaufenden unteren Lichtleiste 34 vorgesehen, welche jeweils eine Vielzahl von LEDs als Leuchtmittel aufweisen. Die obere Lichtleiste 32 und die untere Lichtleiste 34 erstrecken sich jeweils durchgehend oder mit Unterbrechungen über eine Länge, die mindestens so groß ist wie die Länge der in Umfangsrichtung zwischen den freien Enden 18 gemessenen Länge der Kamerareihe 26. Diese entspricht einem Umfangswinkel von mindestens 160 Grad. Nahe den freien Enden 18 sind die obere Lichtleiste 32 und die untere Lichtleiste 34 jeweils mittels einer vertikal verlaufenden weiteren Lichtleiste 36 miteinander verbunden. Die Kamerareihe 26 wird somit vollständig durch mindestens eine Reihe LEDs umrahmt. Die Vorrichtung 10 weist zudem eine in der Zeichnung nicht näher dargestellte Steuer- oder Regeleinrichtung auf, mit der die von den LEDs abgestrahlte Lichtintensität abhängig von der durch die Kameras 16a, 16b detektierten Lichtintensität gesteuert oder geregelt werden kann. Die LEDs der Lichtleisten 32, 34, 36 sind dabei zu Sektoren zusammengefasst, deren abgestrahlte Lichtintensitäten getrennt voneinander gesteuert bzw. geregelt werden können. Zudem ist vorgesehen, dass auch die von den einzelnen LEDs abgestrahlten Lichtintensitäten mittels der Steuer- oder Regeleinrichtung getrennt voneinander gesteuert oder geregelt werden können.

Um den Probanden richtig im Innenraum 22 positionieren zu können, sind die beiden der Frontkamera 16a nächstgelegenen Seitenkameras 16b dazu eingerichtet, den Abstand des Kopfs des Probanden von der Mitte 38 des Kameraträgers 14 zu messen. Mittels einer nicht näher dargestellten Anzeigeeinheit wird dem Probanden angezeigt, ob er richtig steht oder nicht. Die Anzeigeeinheit weist mehrere unterschiedlich eingefärbte Lichtquellen auf, die in einer Reihe angeordnet sind. Die mittlere Lichtquelle leuchtet grün, wenn der Proband richtig steht. Ausgehend von der mittleren Lichtquelle gibt es in jeder Richtung in dieser Reihenfolge eine gelbe, eine orangene und eine rote Lichtquelle, die entsprechend der Farbe anzeigt, wenn der Proband ein wenig, deutlich oder viel zu weit von der Mitte 38 des Kameraträgers 14 entfernt bzw. ein wenig, deutlich oder viel zu nah zur Mitte 38 steht. Um bei der Bestimmung der Zentrierparameter sicherzustellen, dass die Blickrichtung des Probanden ins Unendliche gerichtet ist, ist eine am Kameraträger 14 angeordnete Fixationseinrichtung 42 vorgesehen, die ein Fixationsmuster für den Probanden in Form eines Specklemusters erzeugt. Das Fixationsmuster ist etwas höher angeordnet als die Frontkamera 16a, so dass der Proband über diese hinwegblickt. Damit kann sein Gesicht im größtmöglichen Umfang aufgenommen werden.

Die Vorrichtung 10 eignet sich insbesondere auch zur Herstellung eines Avatars des Kopfs des Probanden, welcher zur Bestimmung der Zentrierparameter herangezogen werden kann. Zum diesem Zweck werden durch die Kameras 16a, 16b kalibrierte Bilder des Kopfs des Probanden ohne Brille bzw. Brillenfassung aufgenommen. Mittels eines geeigneten Prozesses zur geometrischen Positionsbestimmung wie beispielsweise Triangulation wird ein Tiefenprofil des Kopfes erstellt, das diesen näherungsweise sehr gut abbildet. Der Kopf wird durch eine Vielzahl von Punkten abgebildet, die mittels eines Netzmusters miteinander verbunden werden können oder aber als Punktwolke gespeichert werden können. Bei der anschließenden Bestimmung der Zentrierparameter kann der so ermittelte Avatar herangezogen werden, um Zentrierparameter zu bestimmen, die aufgrund der geometrischen Eigenschaften der Brille bzw. Brillenfassung, die der Proband trägt, nicht oder nur näherungsweise bestimmt werden können. Beispielsweise kann ein breiter Fassungsbügel das Auge in einer Seitenaufnahme soweit verdecken, dass der Hornhautscheitelabstand nicht oder nur sehr ungenau bestimmt werden kann. Zudem können gefärbte oder stark spiegelnde Gläser die Augen nicht oder nur sehr schlecht erkennen lassen. Um dem zu begegnen, wird auf die von den Kameras 16a, 16b aufgenommenen Bilder des die Brille oder Brillenfassung tragenden Probanden das Tiefenprofil des Avatars projiziert und die Zentrierparameter, die aufgrund der durch die Brille bzw. Brillenfassung eingeschränkten Sicht nur ungenügend bestimmt werden können, werden mittels der Bilddaten des Avatars bestimmt. Dabei kann eine Anpassung des Avatars auf die Bilder des die Brille bzw. Brillenfassung tragenden Probanden zur Minimierung von Abweichungen erfolgen.

Alternativ oder zusätzlich zur Herstellung des Avatars kann die Vorrichtung 10 wie folgt zur Durchführung eines computerimplementierten Verfahrens zur Bestimmung einer Repräsentation eines Brillenfassungsrands oder einer Repräsentation der Ränder der Gläser einer Brille verwendet werden.

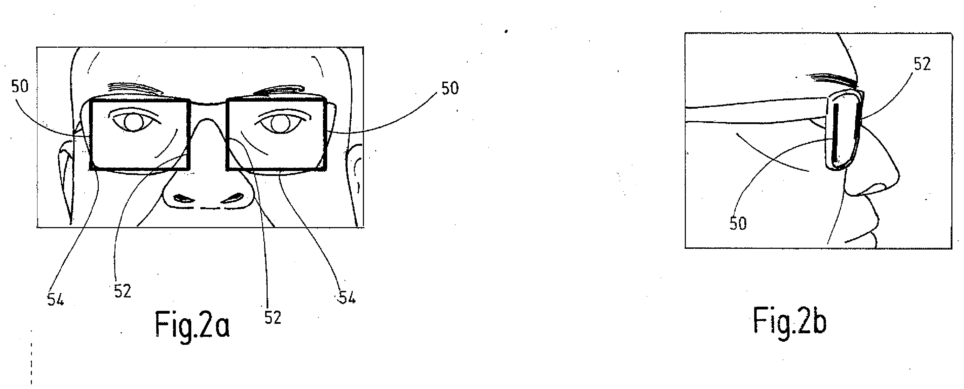

Zunächst werden mittels der Frontkamera 16a und mindestens einer der Seitenkameras 16b Bilder eines Probanden von vorn (Figur 2a) bzw. von der Seite (Figur 2b) aufgenommen, wobei der Proband eine Brille oder eine Brillenfassung trägt. Unter einer Brillenfassung wird dabei auch die Fassung einer randlosen Brille oder einer Teilrandbrille verstanden, die statt Brillengläsern Stützscheiben aufweist. Diese Bilder werden beim erfindungsgemäßen Verfahren zur Verfügung gestellt, ebenso wie ein dreidimensionales, auf geometrischen Parametern beruhendes Modell der Brillenfassung bzw. der Brille bereitgestellt wird. Das Modell wird mit beliebigen, aber sinnvoll erscheinenden Parametern initialisiert und es werden die Fassungsränder bzw. die Glasränder im Modell dreidimensional ermittelt. Die ermittelten Fassungs- oder Glasränder werden auf die aufgenommenen Bilder projiziert oder auf eine Darstellung, die in den Bildern die Wahrscheinlichkeit wiedergibt, mit der entsprechende Pixel zu einem Fassungs- oder Glasrand gehören. Die Parameter des Modells werden mittels einer Kostenfunktion bewertet und in einem anschließenden Optimierungsprozess, bei dem die Kostenfunktion optimiert wird, variiert, bis die Kostenfunktion ein Minimum annimmt. Dabei kann man vereinfachend bei dem Modell zunächst von einer Geometrie der Fassung oder der Brille ausgehen, wie sie in Figur 2a, 2b mittels temporaler und nasaler Kanten 50, 52 beschrieben ist. Näherungsweise kann durch jede temporale Kante 50 und die dazugehörende nasale Kante 52, wie in Figur 2a veranschaulicht, eine Glasebene gelegt werden, die im Modell das Brillenglas näherungsweise abbildet.

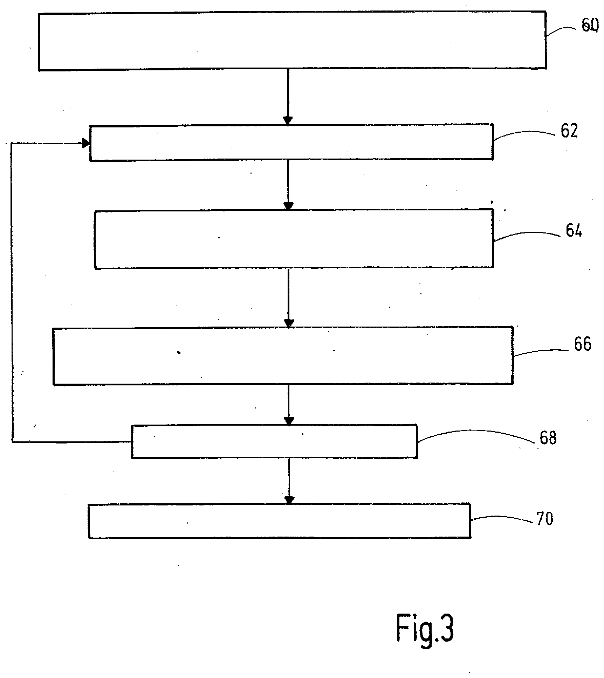

Bei Anwendung einer Markov-Chain-Monte-Carlo(MCMC)-Methode lässt sich der Ablauf des Verfahrens beispielsweise wie in Figur 3 veranschaulicht wiedergeben.

Als Modell werden zwei Ebenen gewählt, die symmetrisch zu einer Mittelebene der Fassung oder Brille sind. Außerdem sind zusätzliche Informationen wie die Glasboxen im Frontbild, Wahrscheinlichkeitskarten für die Kanten in den Seitenbildern und 3D-Position der Augen gegeben (Schritt 60). Aus einer Menge von Trainingsdaten (z.B. aus einer Vielzahl von bekannten Brillenbestellungen) sind Zentrierparameter für eine größere Menge von Brillen bekannt. Aus diesen Trainingsdaten können Statistiken über die Zentrierparameter berechnet werden.

Die Statistiken der Zentrierparameter können unter Beachtung der zusätzlichen geometrischen Vorgaben (beispielsweise Position der Augen, Symmetrie der Glasebenen) auf die Parameter des Modells übertragen werden. Dadurch ist es möglich, Parameter aus einer gegebenen Verteilung zu sampeln (Schritt 62) und die Wahrscheinlichkeit für diese Parameterkombination zu berechnen. (1. Schritt in der MCMC-Optimierung). Sind beispielsweise ein gesampeltes Ebenenpaar und die Glasboxen 54 (vgl. Figur 2a) im Frontbild gegeben, kann man die Glasboxen 54 auf die Ebenen projizieren und dadurch die Glasboxen 54 in dreidimensionalen Koordinaten erhalten. Die Kanten der dreidimensionalen Glasboxen 54 können nun in die Seitenbilder projiziert werden (Schritt 64). Die projizierten Kanten kann man dann mit den im Seitenbild tatsächlich detektierten Kanten vergleichen, z.B. mittels Maschinellem Lernen (Random Forest) oder durch Abstandsmetriken (Chamfer Distance). Je besser die projizierten Kanten zu den detektierten passen, umso höher ist die Wahrscheinlichkeit, dass das gesampelte Modell tatsächlich der Fassung entspricht. Diesen Wert nennt man Score (2. Schritt MCMC-Optimierung, Schritt 66). Dieses Ergebnis kann verworfen werden (Schritt 68), beispielsweise dann, wenn die Wahrscheinlichkeit der gesampelten Parameter bzw. des gesampelten Modells und/oder der Score zu gering sind.

Der MCMC Algorithmus funktioniert so, dass eine große Anzahl Ebenen-Samples generiert wird, die die Wahrscheinlichkeitsdichtefunktion des Modells (basierend auf Parameterwahrscheinlichkeit und Score) simuliert. Besonders viele Samples treten dort auf, wo Parameterwahrscheinlichkeit und Score hoch sind. Um schließlich das beste Modell aus dieser Wahrscheinlichkeitsdichte für den aktuellen Datensatz zu erhalten, detektiert man die Modes dieser Verteilung, z.B. mit dem Meanshift Algorithmus (Schritt 70). Aus dem Ergebnis-Parametersatz lassen sich dann direkt die Zentrierparameter und die zum gewählten Modell passenden Kanten in den Seitenbildern ablesen.

## Patentansprüche

1. Computerimplementiertes Verfahren zur Bestimmung einer Repräsentation eines Brillenfassungsrands oder einer Repräsentation der Ränder der Gläser einer Brille, wobei mindestens zwei aus unterschiedlichen Blickrichtungen aufgenommene Bilder eines die Brillenfassung bzw. die Brille tragenden Kopfes bereitgestellt werden, wobei in jedem Bild Daten für zumindest Teile der Ränder der Brillenfassung bzw. der Ränder der Gläser bestimmt werden, wobei die mindestens zwei Bilder zueinander kalibriert sind, und wobei die Kalibrierung die extrinsischen und intrinsischen Eigenschaften der die Bilder aufnehmenden Kamera oder Kameras umfasst, **dadurch gekennzeichnet, dass** ein dreidimensionales, auf geometrischen Parametern beruhendes Modell der Brillenfassung bzw. der Brille bereitgestellt wird und dass die geometrischen Parameter zur Anpassung des Modells an die detektierten Ränder optimiert werden.

2. Computerimplementiertes Verfahren nach Anspruch 1, **dadurch gekennzeichnet, dass** mindestens zwei gleichzeitig aus unterschiedlichen Blickrichtungen aufgenommene kalibrierte Bilder eines die Brillenfassung bzw. die Brille tragenden Kopfes bereitgestellt werden.

3. Computerimplementiertes Verfahren nach Anspruch 1 oder 2, **dadurch gekennzeichnet, dass** die Bilder aus Pixeln bestehen und dass jedem Pixel ein die Wahrscheinlichkeit, dass das Pixel einen Teil der Ränder der Brillenfassung bzw. der Gläser enthält, abbildender Wert zugeordnet wird.

4. Computerimplementiertes Verfahren nach einem der vorangehenden Ansprüche, **dadurch gekennzeichnet, dass** die geometrischen Parameter des Modells nasale und/oder temporale Kanten der Brillenfassung bzw. der Gläser näherungsweise definierende Linien beschreiben.

5. Computerimplementiertes Verfahren nach einem der vorangehenden Ansprüche, **dadurch gekennzeichnet, dass** das Modell jeden Fassungsrand oder jedes Glas näherungsweise als in einer Ebene liegend definiert.

6. Computerimplementiertes Verfahren nach einem der vorangehenden Ansprüche, **dadurch gekennzeichnet, dass** aus dem Modell Darstellungen der Brillenfassung bzw. der Gläser generiert und auf die aufgenommenen Bilder projiziert werden.

7. Computerimplementiertes Verfahren nach Anspruch 6, **dadurch gekennzeichnet, dass** die Darstellungen der Brillenfassung bzw. der Gläser markante Bereiche der Brillenfassung bzw. der Gläser abbilden.

8. Computerimplementiertes Verfahren nach einem der vorangehenden Ansprüche, **dadurch gekennzeichnet, dass** die geometrischen Parameter durch Einsatz einer Kostenfunktion optimiert werden.

9. Computerimplementiertes Verfahren nach Anspruch 8 und nach einem der Ansprüche 6 oder 7, **dadurch gekennzeichnet, dass** die Kostenfunktion die Übereinstimmung der auf die aufgenommenen Bilder projizierten Darstellungen bewertet.

10. Computerimplementiertes Verfahren nach Anspruch 9, **dadurch gekennzeichnet, dass** ein durch die Kostenfunktion ermittelter Kostenwert durch Verwendung einer Markov-Chain-Monte-Carlo- Methode oder einer Simulated Annealing-Methode oder einer Gradienten-Abstiegsmethode oder eines Nelder-Mead- Verfahrens oder mittels Differential Evolution optimiert wird.

11. Computerimplementiertes Verfahren nach einem der vorangehenden Ansprüche, **dadurch gekennzeichnet, dass** anhand der Bilder mittels geometrischer Positionsbestimmung die Position der Augen im Raum bestimmt wird und dass die Position der Augen definierende Parameter in das Modell einfließen.

12. Computerimplementiertes Verfahren nach einem der vorangehenden Ansprüche, **dadurch gekennzeichnet, dass** die geometrischen Parameter durch Vorgabe von Annahmen oder Statistiken hinsichtlich der Geometrie der Brillenfassung oder der Gläser und/oder durch Vorgabe von Annahmen oder Statistiken hinsichtlich Gesichtsmerkmalen im Wertebereich eingeschränkt und/oder in ihrer Anzahl beschränkt werden.

13. Computerimplementiertes Verfahren nach einem der vorangehenden Ansprüche, **dadurch gekennzeichnet, dass** das Modell eine Wahrscheinlichkeitsverteilung enthält, die Wahrscheinlichkeiten für mögliche Werte der Parameter angibt.

14. Computerprogramm mit Programmcode zur Durchführung aller Verfahrensschritte nach einem der Ansprüche 1 bis 13, wenn das Computerprogramm in einem Computer geladen und in einem Computer ausgeführt wird.

15. Verwendung einer Vorrichtung (10) zur Durchführung eines computerimplementierten Verfahrens nach einem der Ansprüche 1 bis 13, wobei die Vorrichtung (10) einen Kameraträger (14) aufweist, welcher einen nach oben, nach unten und zu einer Rückseite (30) hin offenen Innenraum (22) teilweise umschließt und mindestens drei Kameras (16a, 16b) trägt, die zwischen zwei freien Enden (18) des Kameraträgers (14) angeordnet und auf den Innenraum (22) gerichtet sind, wobei der Kameraträger (14) zur Beleuchtung des Innenraums (22) eine Beleuchtungseinrichtung (32, 34, 36) aufweist.

## Claims

1. Computer-implemented method for determining a representation of a rim of a spectacles frame or a representation of the edges of the spectacle lenses, wherein at least two images taken from different viewing directions of a head wearing the spectacles frame or the spectacles are provided, wherein data for at least portions of the rims of the spectacles frame or the edges of the lenses are determined in each image, wherein the at least two images are calibrated with one another, and wherein the calibration includes the extrinsic and intrinsic properties of the camera or cameras taking the images, **characterized in that** a three-dimensional model of the spectacles frame or the spectacles based on geometric parameters is provided and **in that** the geometric parameters are optimized for adaptation of the model to the detected edges.

2. Computer-implemented method according to Claim 1, **characterized in that** at least two calibrated images taken simultaneously from different viewing directions of a head wearing the spectacles frame or the spectacles are provided.

3. Computer-implemented method according to Claim 1 or 2, **characterized in that** the images consist of pixels and **in that** each pixel is assigned a value depicting the probability that the pixel contains a portion of the rims of the spectacles frame or of the lenses.

4. Computer-implemented method according to one of the preceding claims, **characterized in that** the geometric parameters of the model describe lines approximately defining nasal and/or temporal edges of the spectacles frame or of the lenses.

5. Computer-implemented method according to one of the preceding claims, **characterized in that** the model defines each frame rim or each lens approximately as lying in a plane.

6. Computer-implemented method according to one of the preceding claims, **characterized in that** representations of the spectacles frame or of the lenses are generated from the model and projected onto the images taken.

7. Computer-implemented method according to Claim 6, **characterized in that** the representations of the spectacles frame or of the lenses depict notable regions of the spectacles frame or of the lenses.

8. Computer-implemented method according to one of the preceding claims, **characterized in that** the geometric parameters are optimized by the use of a cost function.

9. Computer-implemented method according to Claim 8 and according to either of Claims 6 and 7, **characterized in that** the cost function assesses the coincidence of the representations projected onto the images taken.

10. Computer-implemented method according to Claim 9, **characterized in that** the cost value determined by the cost function is optimized by using a Markov chain Monte Carlo method or a simulated annealing method or a gradient descent method or a Nelder-Mead method or by means of differential evolution.

11. Computer-implemented method according to one of the preceding claims, **characterized in that** the spatial position of the eyes is determined on the basis of the images by means of geometric position determination and **in that** parameters defining the position of the eyes are fed into the model.

12. Computer- implemented method according to one of the preceding claims, **characterized in that** the geometric parameters are restricted in the range of values and/or are limited in their number by specifying assumptions or statistics with regard to the geometry of the spectacles frame or the lenses and/or by specifying assumptions or statistics with regard to facial features.

13. Computer-implemented method according to one of the preceding claims, **characterized in that** the model includes a probability distribution that indicates probabilities of possible values of the parameters.

14. Computer program with program code for carrying out all of the method steps according to one of Claims 1 to 13 when the computer program is loaded onto a computer and is executed in a computer.

15. Use of an apparatus (10) for carrying out a computer-implemented method according to one of Claims 1 to 13, wherein the apparatus (10) comprises a camera carrier (14), which partially encloses an interior space (22) that is open at the top, at the bottom and to a rear side (30) and carries at least three cameras (16a, 16b), which are arranged between two free ends (18) of the camera carrier (14) and are directed towards the interior space (22), wherein the camera carrier (14) has an illumination device (32, 34, 36) for illuminating the interior space (22).

## Revendications

1. Procédé mis en oeuvre par ordinateur pour la détermination d'une représentation d'un bord de monture de lunettes ou d'une représentation des bords des verres d'une paire de lunettes, dans lequel au moins deux images d'une tête portant la monture de lunettes ou les lunettes sont capturées depuis différentes directions, dans lequel des données pour au moins une partie des bords de la monture de lunettes ou des bords des verres sont déterminées dans chaque image, dans lequel les au moins deux images sont calibrées l'une à l'autre, et dans lequel la calibration comprend les propriétés extrinsèques et intrinsèques de la caméra ou des caméras capturant les images, **caractérisé en ce qu'**un modèle tridimensionnel de la monture ou des lunettes basé sur des paramètres géométriques est réalisé et **en ce que** les paramètres géométriques sont optimisés pour l'adaptation du modèle aux bords détectés.

2. Procédé mis en oeuvre par ordinateur selon la revendication 1, **caractérisé en ce qu'**au moins deux images calibrées capturées simultanément depuis différentes directions d'une tête portant la monture de lunettes ou les lunettes sont réalisées.

3. Procédé mis en oeuvre par ordinateur selon la revendication 1 ou 2, **caractérisé en ce que** les images sont formées de pixels et **en ce que** chaque pixel est ordonné à une valeur représentant la probabilité qu'un pixel contienne une partie des bords de la monture de lunettes ou des verres.

4. Procédé mis en oeuvre par ordinateur selon l'une des revendications ci-dessus, **caractérisé en ce que** les paramètres géométriques du modèle décrivent approximativement des lignes définissant les arêtes nasales et/ou temporales de la monture de lunettes ou des verres.

5. Procédé mis en oeuvre par ordinateur selon l'une des revendications ci-dessus, **caractérisé en ce que** le modèle définit chaque bord de monture ou chaque verre approximativement comme dans un plan.

6. Procédé mis en oeuvre par ordinateur selon l'une des revendications ci-dessus, **caractérisé en ce qu'**à partir du modèle des imageries de la monture de lunettes ou des verres sont générées et projetées sur les images capturées.

7. Procédé mis en oeuvre par ordinateur selon la revendication 6, **caractérisé en ce que** les imageries de la monture de lunettes ou des verres représentent les zones marquantes de la monture de lunettes ou des verres.

8. Procédé mis en oeuvre par ordinateur selon l'une des revendications ci-dessus, **caractérisé en ce que** les paramètres géométriques sont optimisés par utilisation d'une fonction de coût.

9. Procédé mis en oeuvre par ordinateur selon la revendication 8 et selon l'une des revendications 6 ou 7, **caractérisé en ce que** la fonction de coût évalue la concordance des imageries projetées sur les images capturées.

10. Procédé mis en oeuvre par ordinateur selon la revendication 9, **caractérisé en ce qu'**une valeur de coût mesurée par le biais de la fonction de coût est optimisée par l'utilisation d'une méthode de Monte-Carlo par chaîne de Markov (MCMC) ou d'une méthode de recuit simulé ou d'une méthode d'algorithme du gradient ou d'une méthode de Nelder-Mead ou au moyen d'une évolution différentielle.

11. Procédé mis en oeuvre par ordinateur selon l'une des revendications ci-dessus, **caractérisé en ce qu'**à l'aide des images la position des yeux dans l'espace est déterminée par localisation géométrique et **en ce que** la position des yeux influe sur les paramètres de définition dans le modèle.

12. Procédé mis en oeuvre par ordinateur selon l'une des revendications ci-dessus, **caractérisé en ce que** les paramètres géométriques sont restreints à des intervalles de valeurs par spécification des hypothèses ou des statistiques par rapport à la géométrie de la monture de lunettes ou des verres et/ou par spécification des hypothèses ou des statistiques par rapport aux caractéristiques faciales et/ou limités en nombre.

13. Procédé mis en oeuvre par ordinateur selon l'une des revendications ci-dessus, **caractérisé en ce que** le modèle contient une distribution de probabilités qui fournit les probabilités pour les valeurs possibles des paramètres.

14. Programme informatique doté de code de programme destiné à mettre en oeuvre toutes les étapes de procédé selon l'une des revendications 1 à 13, lorsque le programme informatique est chargé dans un ordinateur et est exécuté dans un ordinateur.

15. Utilisation d'un appareil (10) destiné à exécuter un procédé mis en oeuvre par ordinateur selon l'une des revendications 1 à 13, dans laquelle l'appareil (10) comporte un support de caméra (14), lequel entoure partiellement un espace intérieur (22) ouvert vers le haut, vers le bas et sur une face arrière (30) et porte au moins trois caméras (16a, 16b), qui sont agencées entre deux extrémités libres (18) du support de caméra (14) et sont dirigées vers l'espace intérieur (22), dans laquelle le support de caméra (14) comporte un dispositif d'illumination (32, 34, 36) pour illuminer l'espace intérieur (22).
